# EUROPÄISCHE PATENTSCHRIFT

(11) **EP 2 056 989 B1**
(45) Veröffentlichungstag und Bekanntmachung des Hinweises auf die Patenterteilung: **28.01.2015**
(21) Anmeldenummer: 07818042.9
(22) Anmeldetag: 30.08.2007
(51) Int. Cl.: B23K 9/28

(54) **BIEGBARER SCHWEISSGERÄTEHALS UND SCHWEISSGERÄT FÜR EINE HANDHABUNGSVORRICHTUNG**
FLEXIBLE NECK FOR A WELDING DEVICE AND WELDING DEVICE FOR A ROBOT
COL FLEXIBLE DE SOUDEUSE ET APPAREIL DE SOUDURE DESTINÉ À UN DISPOSITIF DE MANIPULATION

(30) Priorität: 30.08.2006 AT 65006 U
(43) Veröffentlichungstag der Anmeldung: 13.05.2009
(73) Patentinhaber: ABB AG, 1109 Wien (AT)
(72) Erfinder: IHRIG, Jörg, 64711 Erbach (DE); ESKANDARI, Mehran, 1070 Wien (AT)
(74) Vertreter: Kock, Ina
(86) Internationale Anmeldenummer: PCT/EP2007/007597
(87) Internationale Veröffentlichungsnummer: WO 2008/025553

(56) Entgegenhaltungen:
- US-A- 2 900 829
- US-A- 3 109 916
- US-A- 4 986 002
- US-A- 5 558 268

## Beschreibung

Die Erfindung betrifft einen Schweißgerätehals für ein Schweißgerät einer Handhabungsvorrichtung, insbesondere für einen Schweißbrenner eines mehrachsigen Industrieroboters. Auch ein entsprechendes Schweißgerät ist erfindungsgemäß umfasst und beansprucht.

Der Einsatz von Robotern im Automatisierungsbereich, beispielsweise in der Lackier- und/oder Scheißtechnik, oder von robotergestützter Automation zählt zu den am weitest verbreiteten Anwendungen bei modernen Robotersystemen. Im Rahmen automatisierter Schweißverfahren findet damit sowohl das Lichtbogenschweißen, als auch das Laser und Plasmaschweißen als mittlerweile standardisierte Anwendung bei vielfältigen robotergestützten Anlagen.

Dementsprechend werden beispielsweise für das automatisierte Schweißen Schweißbrennerhälse, welche auch als Rohrbogen bezeichnet werden, standardmäßig von verschiedenen Anbietern in unterschiedlichen Ausführungen, abgestimmt und angepasst auf den jeweiligen Schweißprozess oder das jeweilige Verfahren, angeboten. Allen Ausführungen oder Anwendungen gemein ist dabei, dass der Schweißbrennerhals stets einen festen Winkel zum Handflansch des Roboters aufweist, wobei dieser Winkel in aller Regel zwischen 0° und ca. 60° variieren kann.

Auch ist die Form des eingesetzten Schweißbrennerhalses dabei üblicherweise auf den jeweiligen Prozess oder die jeweilige Anwendung, insbesondere an den Verlauf und die Position der zu setzenden Schweißnaht in Relation zum jeweiligen Werkstück angepasst.

Der Schweißbrennerhals kann vorne direkt an der Düse oder am Anfang des Schweißbrennerhalses abgewinkelt sein. Ebenso kann auch der Schweißbrennerhals selbst unterschiedlich geformt oder ausgebildet sein, beispielsweise als sog. "Schwanenhals" welcher den Schweißdraht in Verlängerung der sechsten Achse eines sechsachsigen Industrieroboters aus der Schweißbrennerdüse austreten zu lassen.

Dem natürlichen Bestreben nach immer größerer Flexibilität und Effizienz beim Produktionsprozess sind durch den fest vorgegebenen und individuell auf den jeweiligen Einzelfall angepassten und abgestimmten Schweißbrennerhals Grenzen gesetzt, da mit einer Schweil3brennerausgestaitung nur bestimmte Schweißnahtverläufe auf bestimmten Werkstücken setzbar sind.

Diesbezüglich ist aus der US 2 900 829 A ist eine Positioniereinrichtung für einen Schweißkopf und im Besonderen eine Positioniereinrichtung zur Feineinrichtung eines Schweißkopfes bekannt geworden, bei welcher ein Verfahren des Schweißkopfes zwar ermöglicht, jedoch die Winkelstellung der Düse in Relation zum Befestigungsflansch fest vorgegeben und nicht veränderlich ist.

Auch der US 5 558 268 A der die Bezeichnung des Gegenstands der Erfindung offenbart, ist eine Handhabungsvorrichtung mit einer Schweißanordnung mit einem Schweißgerätehals entnehmbar, welcher in einer längsgestreckten und in einer gewinkelten beziehungsweise geknickten Ausführung, mit einem Winkel von 45°ausgebildet sein kann.

Weiterhin ist in der US 3 109 916 A ein manuell beziehungsweise per Hand zu handhabendes Schutzgasschweißgerät mit einem Griff und einem Schweißkopf mit einer Art Schweißgerätehals und einer Schweißdüse angegeben, bei welchem der Schweißkopf gegenüber dem Griff verstellbar ausgebildet ist.

Sind darüber hinaus weitere oder anders verlaufende Schweißnähte erforderlich, beispielsweise weil prozessbedingt mehrere unterschiedliche Produkte zu bearbeiten sind oder an einem Produkt mit komplexer Geometrie mehrere Nähte zu setzen sind, so ist in der Regel aufgrund der fest vorgegebenen Abwinkelung des Halses ein Wechsel des jeweiligen Schweißgerätes oder der Einsatz zusätzlicher Geräte erforderlich. Ein derartiges Vorgehen wiederum ist mit Umstellungs- und/oder Stillstandszeiten und/oder mit einem erhöhten Aufwand und Kosten verbunden.

Eine effiziente und flexible Nutzung derartiger Geräte ist auf diese Weise bislang jedoch nicht ermöglicht.

Der Erfindung liegt somit die Aufgabe zu Grunde ein Schweißgerät für eine Handhabungsvorrichtung anzugeben, welches eine effiziente und flexible Nutzung auch in unterschiedlichen Produktionsprozessen oder bei unterschiedlichen Produkten ermöglicht

Diese Aufgabe wird durch einen biegbaren Schweißgerätehals für ein Schweißgerät einer Handhabungsvorrichtung mit den Merkmalen des Anspruchs 1 gelöst Vorteilhafte Ausgestaltungen und Weiterbildungen der Erfindung sowie ein entsprechendes Schweißgerät sind in weiteren Ansprüchen und der nachfolgenden Beschreibung angegeben.

Demgemäß weist der biegbare Schweißgerätehals eine Verbindungseinrichtung sowie ein Kopfelement auf, wobei die Verbindungseinrichtung ein erstes Verbindungselement, sowie ein zweites Verbindungselement umfasst, welche mittels einer Verstelleinrichtung zusammenwirken und gegeneinander verdrehbar und verschwenkbar sind.

Vorteilhaft ist vorsehbar, dass das Verdrehen und das Schwenken um wenigstens eine feste Achse, insbesondere jedoch um zwei oder mehr senkrecht aufeinander stehende Achsen, bewirkt werden kann.

Auch kann in einer weiteren Ausgestaltung vorgesehen sein, dass die Verstelleinrichtung wenigstens ein Basiselement, wenigstens ein Halteelement, sowie wenigstens eine Antriebseinheit, insbesondere einen Servomotor und/oder ein Gleichstrom-Servomotor und/oder einen pneumatischen Antrieb und/oder einen hydraulischen Antrieb, aufweist, wobei die Antriebseinheit an dem Basiselement angeordnet ist und über wenigstens ein Stellelement mit dem Halteelement zusammenwirkt.

Weiterhin kann vorgesehen sein, dass die Verstelleinrichtung mit einer Steuer-/Regeleinrichtung, insbesondere mit der Steuer-/Regeleinrichtung der jeweiligen Handhabungsvorrichtung oder einer übergeordneten speicherprogrammierbaren Steuerung zusammenwirkt und/oder durch diese ansteuerbar und/oder die Verstelleinrichtung verstellbar sowie insbesondere verbiegbar ist.

Weiterbildend kann die Verstelleinrichtung neben dem wenigstens einen Basiselement und dem wenigstens einen Halteelement auch noch wenigstens ein Führungselement aufweisen, wobei wenigstens ein Basis- und wenigstens ein Halteelement über wenigstens ein Führungselement verbunden sind und zusammenwirken.

Das Führungselement stabilisiert und unterstützt dabei die Verstelleinrichtung unter Anderem gegen seitliche Scherkräfte.

Das jeweilige Führungselement ist beispielhaft als Federelement ausbildbar, wobei insbesondere ein Federblech, eine Spiralfeder, oder ein Drehstab oder eine Kombination daraus vorteilhaft einsetzbar ist.

In einer weiteren Ausgestaltung umfasst die Verstelleinrichtung neben wenigstens je einem Basis- sowie Halteelement zusätzlich noch wenigstens eine Kupplungsvorrichtung, durch welche wenigstens ein Halteelement mit wenigstens einem Basiselement, um wenigstens eine Achse drehbar, verbunden ist.

In einer Ausführungsvariante umfasst die Kupplungsvorrichtung wenigstens zwei einander angepasste, insbesondere komplementäre, Kupplungselemente, von denen je ein Kupplungselement am Basiselement und am Halteelement angeordnet ist, und welche Kupplungselemente zusammen ein Gelenk, insbesondere ein Drehgelenk, mit wenigstens einer Drehachse bilden.

Dieses Gelenk, insbesondere das Drehgelenk, kann beispielhaft jeweils wenigstens zwei Gelenkbohrungen und einen diese Bohrungen durchgreifenden Gelenkstift oder - bolzen aufweisen.

Der verfügbare Dreh- und/oder Schwenkbereich beträgt ca. 60°, wobei vorsehbar ist, ausgehend von eine Null- oder Ruhelage eine Schwenkbewegung und/oder Drehbewegung von ca. ± 30° bewirkt beziehungsweise ausgeführt werden kann. In Ruhelage sind Basiselement und Halteelement fluchtend ausgerichtet, die Verstelleinrichtung ist gesteckt und nicht gebogen.

In einer weiterführenden Ausgestaltung ist im Sinne einer vereinfachten und/oder effizienten Bestimmung des Tool Center Point (TCP) die jeweilige Dreh- und/oder Schwenkachse vorteilhaft mittig zur Verstellvorrichtung angeordnet.

Die Werkzeugposition, und damit auch die Position des Schweißgerätehalses, einer Handhabungsvorrichtung und insbesondere eines Industrieroboters, wird mittels des sog. Tool Center Point (TCP) beschrieben und angegeben. Dies ist ein gedachter Referenzpunkt, der einer geeigneten Stelle des Werkzeugs, beispielsweise der Spitze einer Schweißbrennerdüse zugeordnet ist. Um anzugeben, in welcher Lage das Roboterwerkzeug sich befindet, genügt es, die Position des TCP im Raum und seine Verdrehung auszulesen und/oder anzugeben.

In einer vorteilhaften Fortbildung ist vorsehbar, dass der Schwenk oder Drehwinkel sowie der Verbiegewinkel der Verstelleinrichtung stufenlos und/oder in vorbestimmbaren Schritten veränderbar und/oder anpassbar ist.

Vorteilhaft ist der beanspruchte biegbare Schweißgerätehals vielfältig einsetzbar, insbesondere in Verbindung mit einem Schweißgerät für eine Handhabungsvorrichtung beim industriellen Lichtbogenschweißen oder Plasmaschweißen oder Laserschweißen.

Der Schweißgerätehals kann dabei insbesondere als Schweißbrennerhals und das Kopfelement als Schweißdüse und/oder Brennerdüse ausgebildet sein.

Vorteilhaft ist vorsehbar dass Versorgungsmedien, wie insbesondere Gas, Strom und/oder Wasser, mittels wenigstens einer flexiblen Medienführung, wie beispielsweise Schlauchverbindungen und/oder Schlauchpakete, durch den Gerätehals und/oder zum Kopfelement führbar sind.

Die Verbindungseinrichtung ist im Wesentlichen als Hohlprofil, insbesondere als konisch zum Kopfelement zulaufende Röhre oder Rohr ausbildbar.

Vorteilhaft sind die Verbindungselemente der Verbindungseinrichtung starr ausgebildet.

In einer weiteren Ausführungsvariante weist die Verstelleinrichtung und insbesondere das Basiselement (F) sowie das Halteelement (H), vorzugsweise mittig, wenigstens eine Ausnehmung zur Durchführung der wenigstens einen flexiblen Medienführung, insbesondere von Schläuchen oder Schlauchpaketen zur Leitung von Versorgungsmedien, auf. Die jeweilige Medienführung ist dabei nicht fest mit der Verstelleinrichtung und deren Elementen verbunden, sondern wird lediglich lose geführt beziehungsweise gehaltert.

Weiterhin ist wenigstens eine Führungsvorrichtung vorsehbar, welche fest mit dem Basiselement und über ein Gelenkbeweglich mit dem Halteelement verbunden ist.

Alternativ oder ergänzend dazu ist wenigstens eine Führungsvorrichtung vorsehbar, welche über ein weiteres Gelenk beweglich mit dem Basiselement und fest beziehungsweise starr mit dem Halteelement verbunden ist.

In einer weiteren vorteilhaften Weiterbildung ist eine Anschlusseinrichtung zur Anordnung des Schweißgerätehalses an einem Schweißgerät und/oder an einer Handhabungsvorrichtung vorgesehen.

Des Weiteren sind in beziehungsweise an der Verstelleinrichtung Sensoren zur Bestimmung der Winkellage und/oder Position, insbesondere kapazitive, induktive oder optische Sensoren, sowie Dehnungsmessstreifen und/oder eine Kombination daraus vorsehbar. Diese können beispielsweise zur Bestimmung beziehungsweise Erfassung des TCP herangezogen werden.

Auch ist vorteilhaft vorsehbar, dass die Verstelleinrichtung außerhalb der Medienführung oder innerhalb der Medienführung angeordnet ist.

Zum Schutz vor Beschädigungen und/oder Verunreinigungen kann die Verstelleinrichtung mit einer flexiblen Hülle, insbesondere einem dehnfähigen, elastischen Kunststoff, umgeben sein.

Darüber hinaus wird die gestellte Aufgabe auch durch ein Schweißgerät für eine Handhabungsvorrichtung mit einem biegbaren Schweißgerätehals in einer der vorgenanten Ausführungen gelöst.

Dabei kann es sich insbesondere um einen Schweißbrenner handeln.

Das Schweißgerät kann vorteilhaft eine Anschlußeinrichtung, insbesondere einen Flansch, zur Anordnung des Schweißgerätes an einer Handhabungsvorrichtung, insbesondere am distalen Ende eines mehrachsigen Industrieroboters, aufweisen.

Weiterhin ist vorsehbar, dass Versorgungsmedien, wie insbesondere Gas, Strom, Schweißdraht und/oder Wasser, durch flexible Medienführungen, insbesondere Schlauchverbindungen und/oder Schlauchpakete, durch den biegbaren Schweißgerätehals bis hin zum Kopfelement, beispielsweise einer Schweißbrennerdüse, geführt sein.

Auch eine Handhabungsvorrichtung, insbesondere ein mehrachsiger Industrieroboter, mit einem demgemäßen Schweißgerät und/oder einer entsprechenden Steuer-/Regeleinrichtung zur Bewegungs- und/oder Werkzeugsteuerung wird ausdrücklich in die Offenbarung einbezogen und mit beansprucht, da auch dieser zur Lösung der gestellten Aufgabe beiträgt.

Durch die angegebene Erfindung ist erreicht, dass auch größere, komplexere Werkstücke sowie unterschiedliche Werkstücke im Zusammenwirken mit einer Handhabungsvorrichtung, insbesondere einem Industrieroboter, effizient verarbeitet und in der optimalen "Wannenposition" geschweißt werden können. Mögliche Winkelfehler bei der Einstellung des Arbeiterwinkels durch die Robotersteuerung, beispielsweise aufgrund von Verschleiß oder Ähnlichem an der Verstellereinrichtung können durch eine gebräuchliche Tool Centre Point" TCP - Vermessungsanlage korrigiert und/oder kompensiert werden. Derartige Korrekturen und/oder Kompensationen können entweder jedes Mal und/oder einmalig bei der Inbetriebnahme und/oder zyklisch zum Zweck der Qualitätskontrolle nach festgelegten Intervallen durchgeführt werden.

Die weitere Darlegung der Erfindung und vorteilhafter Weiterbildungen erfolgt anhand von einigen Figuren und Ausführungsbeispielen.

Es zeigen:
Fig. 1 beispielhaft ausgebildeter biegbarer Schweißgerätehals in Ruhelage
Fig. 2 biegbarer Schweißgerätehals gemäß Fig. 1, jedoch um Verbiegewinkel α aus Ruhelage ausgelenkt,
Fig. 3 beispielhaft ausgebildeter biegbarer Schweißgerätehals in drei versch. Winkellagen,
Fig. 4 beispielhaft ausgebildeter biegbarer Schweißgerätehals in 3dim-Darstellung mit Verstelleinrichtung mit Federblech als Führungselement, jedoch ohne feste Drehachse,
Fig. 5 beispielhaft ausgebildeter biegbarer Schweißgerätehals in 3dim-Darstellung mit Verstelleinrichtung mit Federblech als Führungselement, sowie fester Drehachse durch Kupplungseinrichtung,
Fig. 6 beispielhaft ausgebildeter biegbarer Schweißgerätehals in 3dim-Darstellung mit Verstelleinrichtung mit Spiralfedern als Führungselement, sowie fester Drehachse im Bereich des Halteelementes,
Fig. 7 beispielhaft ausgebildeter biegbarer Schweißgerätehals in 3dim-Darstellung mit Verstelleinrichtung mit Spiralfedern als Führungselement, sowie fester Drehachse mittig zur Verstelleinrichtung, und
Fig. 8 beispielhaft ausgebildeter biegbarer Schweißgerätehals in 3dim-Darstellung mit Verstelleinrichtung mit Spiralfedern als Führungselement, sowie fester Drehachse im Bereich zur Verstelleinrichtung jedoch gegenüber Fig. 7 unterschiedlichem Stellelement.

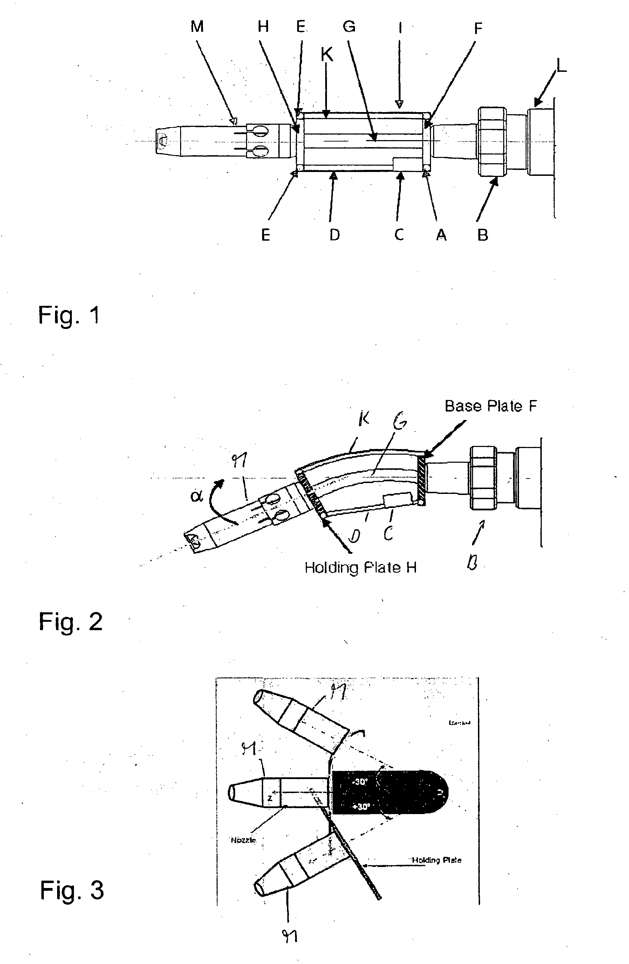

In Fig. 1 ist ein beispielhaft ausgebildeter erfindungsgemäßer biegbarer Schweißgerätehals für ein Schweißgerät, hier ein Schweißbrenner, einer Handhabungsvorrichtung gezeigt. Dieser weist eine Verbindungseinrichtung sowie ein Kopfelement M auf, wobei, die Verbindungseinrichtung ein erstes Verbindungselement, sowie ein zweites Verbindungselement umfasst, welche mittels einer Verstelleinrichtung I zusammenwirken und gegeneinander verdrehbar und verschwenkbar sind.

Verstelleinrichtung I umfasst wenigstens ein Basiselement F, insbesondere eine Basisplatte, wenigstens ein Halteelement H, insbesondere eine Halteplatte, sowie wenigstens eine Antriebseinheit C, im hier gezeigten Beispiel ein Servomotor, wobei die Antriebseinheit C an dem Basiselement F angeordnet ist und über wenigstens ein Stellelement D, hier ein Gestänge, mit dem Halteelement H zusammenwirkt.

Weiterhin kann beispielsweise ein durch den Antrieb antreibbares Schneckengetriebe vorgesehen sein, welches das Gestänge des Stellelementes D verlängert oder verkürzt beziehungsweise aus- oder einfährt und damit die Verstelleinrichtung I aus der Ruhelage verbiegt, wie bei Verkürzung des Stellelementes in Fig. 2 gezeigt.

Weiterhin kann vorgesehen sein, dass die Verstelleinrichtung I mit einer Steuer-/Regeleinrichtung, insbesondere mit der Steuer-/Regeleinrichtung der jeweiligen Handhabungsvorrichtung oder einer übergeordneten speicherprogrammierbaren Steuerung zusammenwirkt und/oder durch diese ansteuerbar und/oder die Verstelleinrichtung I verstellbar sowie insbesondere verbiegbar ist.

Weiterbildend kann die Verstelleinrichtung I neben dem wenigstens einen Basiselement F und dem wenigstens einen Halteelement H auch noch wenigstens ein Führungselement K, im hier gezeigten Beispiel als Federelement in Gestalt einer Blattfeder oder eines Federbleches, vorgesehen, wobei das Basis- F und das Halteelement H über die Blattfeder oder das Federblech (Federstahl) verbunden sind und zusammenwirken.

Alternativ zur Blattfeder oder Federblech ist grundsätzlich auch ein elastisch federnder Kunststoff einsetzbar.

Das Federelement K stabilisiert und unterstützt dabei die Verstelleinrichtung I unter Anderem gegen seitliche Scherkräfte.

Der verfügbare Dreh- und/oder Schwenkbereich beträgt, wie in Fig. 3 anhand der drei Winkellagen gezeigt, ca. 60°, wobei vorsehbar ist,
ausgehend von einer Null- oder Ruhelage eine Schwenkbewegung und/oder Drehbewegung von ca. ± 30° bewirkt beziehungsweise ausgeführt werden kann. In Ruhelage sind dabei Basiselement F und Halteelement H fluchtend ausgerichtet, die Verstelleinrichtung I ist gesteckt und nicht gebogen.

Als Kopfelement ist hier eine Schweißbrennerdüse vorgesehen.

Des weiteren ist eine Anschlußeinrichtung B zum Anschluß beziehungsweise zur Verbindung mit einem Schweißgerät L vorgesehen.

Des Weiteren ist eine flexible Medienführung G in Form von Schlauchverbindungen zur Weiterleitung der Versorgungsmedien an die Schweißbrennerdüse M.

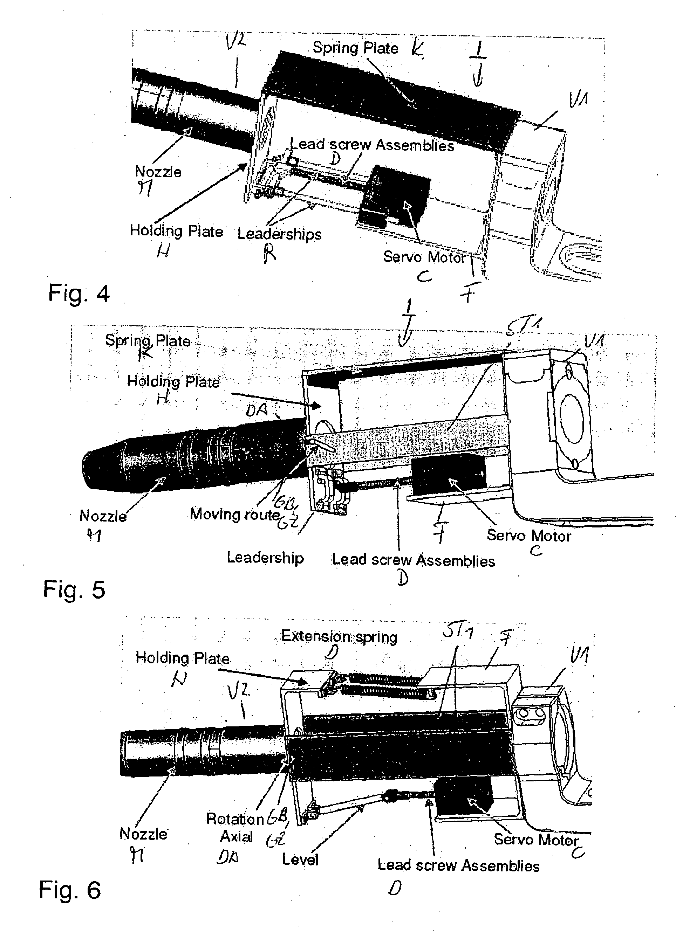

In Fig. 4 ist ein beispielhaft ausgebildeter biegbarer Schweißgerätehals, hier ein Schweißbrennerhals, in 3dim-Darstellung mit Verstelleinrichtung I mit Federblech als Führungselement K, mit L-förmigem Basiselement F sowie einer Verbindungseinrichtung mit einem ersten abgewinkelten Verbindungselement V1 und einem zweiten Verbindungselement V2 mit Schweißbrennerdüse M gezeigt. An dem L-förmigen Basiselement F ist ein Servomotor C mit einem Schneckengetriebe (nicht explizit dargestellt) mit einem Gestänge als Stellelement D, jedoch ohne Kupplungsvorrichtung mit fester Drehachse gezeigt.

Zur Drehwinkelbegrenzung sind zwei Bänder oder Riemen R vorgesehen, welche Basiselement F und Halteelement H verbinden.

Basis- F, Halteelement H und Verbindungselement V1 weisen Ausnehmungen AU im Mittelbereich zur Durchführung von flexiblen Versorgungsschläuchen inklusive darin geführter Medien auf.

In Fig. 5 ist ein beispielhaft ausgebildeter biegbarer Schweißgerätehals, hier ein Schweißbrennerhals, in 3dim-Darstellung mit Verstelleinrichtung I mit Federblech als Führungselement K, sowie fester Drehachse DA durch Kupplungseinrichtung KU gezeigt. Die hier gezeigte Ausführungsform entspricht weitestgehend der in Fig. 4 gezeigten, so dass zur weiteren Erläuterung auf die Beschreibung zu Fig. 4 verwiesen du Bezug genommen wird.

Im Unterschied zu Fig. 4 ist in Fig. 5 zusätzlich eine Kupplungseinrichtung KU vorgesehen, welche zwei am Basiselement F angeordnete parallel verlaufende Stege ST1 mit je einer Gelenkbohrung GB, sowie zwei darauf angepasste Stege (nicht explizit dargestellt) mit je einer Gelenkbohrung GB im Nahbereich des Halteelementes H. Die Gelenkbohrungen GB durchgreift ein Gelenkstift GS und bildet damit ein Drehgelenk im Nahbereich des Halteelementes H mit einer festen Drehachse. Die Drehachse verläuft dabei senkrecht zur Längsachse des Schweißbrennerhalses, so dass eine Änderung der Winkellage in vertikaler Richtung bewirkbar ist.

In Fig. 6 ist ein beispielhaft ausgebildeter biegbarer Schweißgerätehals in 3dim-Darstellung gezeigt, der im Wesentlichen der aus Fig. 5 bekannten Ausführungsform entspricht, so dass auch hier zur näheren Erläuterung auf die Ausführungen zu Fig. 4 und Fig. 5 verwiesen wird. Im Unterschied zu Fig. 4 ist das Basiselement F U-förmig und das Halteelement H L-förmig ausgebildet. Ein Schenkel der Basiselementes F sowie ein Schenkel des Halteelementes H sind über zwei Federelemente K, nämlich zwei Spiralfedern verbunden. Die beiden Federn sind dabei um einen vorbestimmbaren Betrag vorgespannt. Des Weiteren ist als Stellelement D eine zweiteiliges über eine Kupplung drehbar verbundenes Gestänge vorgesehen, durch welches das zweite Verbindungselement V2 vermittels des Servomotors C aus seiner Ruhelage auslenkbar ist

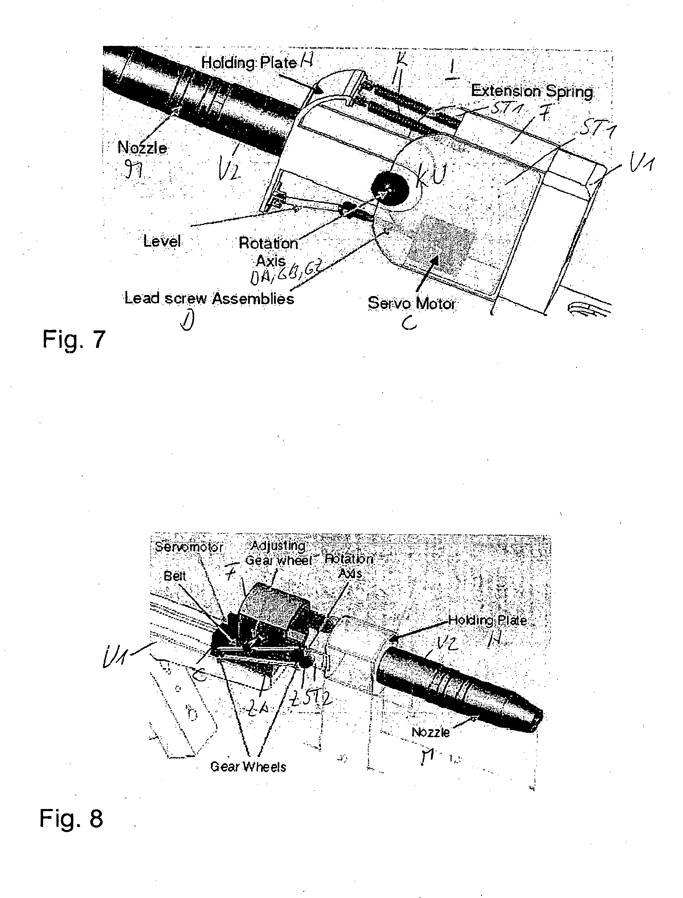

In Fig. 7 ist ein beispielhaft ausgebildeter biegbarer Schweißgerätehals in 3dim-Darstellung mit Verstelleinrichtung I mit Spiralfedern als Führungselement K, sowie fester Drehachse mittig zur Verstelleinrichtung I gezeigt. Die Ausgestaltung entspricht dabei im Wesentlichen der aus Fig. 6 bekannten Ausführung. Der einzige relevante Unterschied kann darin gesehen werden, dass die Kupplungseinrichtung KU zwei am Basiselement F angeordnete parallel verlaufende Stege ST1 mit je einer Gelenkbohrung GB, sowie zwei darauf angepasste Stege ST2 mit je einem in die jeweilige Gelenkbohrung GB eingreifenden Gelenkzapfen oder -stift GZ und ein mittig in der Verstelleinrichtung I gebildetes Drehgelenk mit einer festen Drehachse. Die Drehachse verläuft dabei senkrecht zur Längsachse des Schweißbrennerhalses, so dass mittels des Servomotors C eine Änderung der Winkellage in vertikaler Richtung bewirkbar ist.

Zur weiteren Darlegung wird auf die voranstehenden Figurenbeschreibungen, insbesondere zu Fig. 6 und 7 verwiesen.

In Fig. 8 ist beispielhaft ausgebildeter biegbarer Schweißgerätehals in 3dim-Darstellung mit Verstelleinrichtung I ohne Führungselement K , sowie fester Drehachse im mittig zur Verstelleinrichtung I jedoch gegenüber Fig. 7 mit im Wesentlichen unterschiedlichem Stellelement D gezeigt.

Das Stellelement wird nicht durch ein Gestänge sondern vielmehr durch einen Riemen oder Kettenantrieb gebildet, wobei wenigstens ein im Gelenkbereich an wenigstens einem Steg ST2 des Halteelementes H angeordnetes Zahnrad Z über die Antriebseinheit und einen Zahnriemen oder eine Kette antreibbar und damit mittels des Servomotors C eine Änderung der Winkellage in vertikaler Richtung und damit eine Verbiegung des Schweißgerätehalses bewirkbar ist.

## Patentansprüche

1. Biegbarer Schweißgerätehals mit einer Verbindungseinrichtung sowie einem Kopfelement (M), wobei die Verbindungseinrichtung ein erstes Verbindungselement (V1), sowie ein zweites Verbindungselement (V2) umfasst, welche mittels einer Verstelleinrichtung (I) zusammenwirken, **dadurch gekennzeichnet, dass** das erste Verbindungselement (V1) und das zweite Verbindungselement (V2) gegeneinander verdrehbar und verschwenkbar sind

2. Biegbarer Schweißgerätehals nach Anspruch 1, **dadurch gekennzeichnet, dass** das Verdrehen und das Schwenken um wenigstens eine Achse , insbesondere jedoch um zwei oder mehr senkrecht aufeinander stehende Achsen, bewirkbar ist.

3. Biegbarer Schweißgerätehals nach Anspruch 1 oder 2, **dadurch gekennzeichnet, dass** die Verstelleinrichtung (I) wenigstens ein Basiselement (F), wenigstens ein Halteelement (H), sowie wenigstens eine Antriebseinheit ( C ), insbesondere einen Servomotor und/oder ein Gleichstrom-Servomotor und/oder einen pneumatischen Antrieb und/oder einen hydraulischen Antrieb, aufweist, wobei die Antriebseinheit (C) an dem Basiselement angeordnet ist und über wenigstens ein Stellelement (D) mit dem Halteelement (H) zusammenwirkt.

4. Biegbarer Schweißgerätehals nach einem der vorherigen Ansprüche, **dadurch gekennzeichnet, dass** die Verstelleinrichtung (i) mit einer Steuer-/Regeleinrichtung, insbesondere die Steuer-/Regeleinrichtung einer Handhabungsvorrichtung oder eine übergeordnete speicherprogrammierbare Steuerung, zusammenwirkt und durch diese ansteuerbar und/oder die Verstelleinrichtung (I) verstellbar, insbesondere verbiegbar ist.

5. Biegbarer Schweißgerätehals nach einem der vorherigen Ansprüche, **dadurch gekennzeichnet, dass** die Verstelleinrichtung (I) wenigstens ein Basiselement (F), wenigstens ein Halteelement (H), sowie wenigstens ein Führungselement (K) aufweist, wobei wenigstens ein Basis- (F) und Halteelement (H) über wenigstens ein Führungselement (K) verbunden sind und zusammenwirken.

6. Biegbarer Schweißgerätehals nach einem der vorherigen Ansprüche, **dadurch gekennzeichnet, dass** die Verstelleinrichtung (I) wenigstens ein Basiselement, (F), wenigstens ein Halteelement (H) sowie wenigstens ein Kupplungsvorrichtung (KU) umfasst, durch welche wenigstens ein Halteelement (H) um wenigstens eine Achse drehbar mit wenigstens einem Basiselement (F) verbunden ist.

7. Biegbarer Schweißgerätehals nach Anspruch 6, **dadurch gekennzeichnet, dass** die Kupplungsvorrichtung (KU) wenigstens zwei einander angepasste, insbesondere komplementäre, Kupplungselemente umfasst, wobei je ein Kupplungselement am Basiselement (F) und am Halteelement (H) angeordnet ist, und welche Kupplungselemente zusammen ein Gelenk, insbesondere ein Drehgelenk, mit wenigstens einer Drehachse bilden.

8. Biegbarer Schweißgerätehals nach einem der vorherigen Ansprüche, **dadurch gekennzeichnet, dass** der Schwenk oder Drehwinkel sowie der Verbiegewinkel der Verstelleinrichtung (I) stufenlos und/oder in vorbestimmbaren Schritten veränderbar und/oder anpassbar ist.

9. Biegbarer Schweißgerätehals nach einem der vorherigen Ansprüche, **dadurch gekennzeichnet, dass** die Verstelleinrichtung (I) und insbesondere das Basiselement (F) sowie das Halteelement (H), vorzugsweise mittig, wenigstens eine Ausnehmung zur Durchführung wenigstens einer flexiblen Medienführung (G), insbesondere von Schläuchen oder Schlauchpaketen zur Leitung von Versorgungsmedien, aufweist und/oder diese mit der wenigstens einen Medienführung (G) nicht fest verbunden ist.

10. Biegbarer Schweißgerätehals nach einem der vorhergehenden Ansprüche, **dadurch gekennzeichnet, dass** ein Führungselement (I) vorgesehen ist, welches über ein weiteres Gelenk (A) beweglich mit dem Basiselement (F) und fest beziehungsweise starr mit dem Halteelement (H) verbunden ist.

11. Biegbarer Schweißgerätehals nach einem der vorhergehenden Ansprüche, **dadurch gekennzeichnet, dass** eine Anschlußeinrichtung (B) zur Anordnung an einem Schweißgerät und/oder einer Handhabungsvorrichtung vorgesehen ist.

12. Biegbarer Schweißgerätehals nach einem der vorhergehenden Ansprüche, **dadurch gekennzeichnet, dass** die Verstelleinrichtung (I) Sensoren zur Bestimmung der Winkellage und/oder Position, insbesondere kapazitive, induktive oder optische Sensoren, sowie Dehnungsmessstreifen und/oder eine Kombination daraus aufweist.

13. Biegbarer Schweißgerätehals nach einem der vorhergehenden Ansprüche, **dadurch gekennzeichnet, dass** die Verstelleinrichtung (I) in der Medienführung (G) integriert ist.

14. Schweißgerät für eine Handhabungsvorrichtung mit einem biegbaren Schweißgerätehals gemäß einem der Ansprüche 1 bis 13.

15. Schweißgerät für eine Handhabungsvorrichtung nach Anspruch 14, **dadurch gekennzeichnet, dass** wenigstens eine Anschlußeinrichtung, insbesondere ein Flansch, zur Anordnung des Schweißgerätes an einer Handhabungsvorrichtung, insbesondere an deren distalem Ende, vorgesehen ist.

## Claims

1. Flexible neck for a welding device, comprising a connecting device and a head element (M), the connecting device comprising a first connecting element (V1) and a second connecting element (V2), which interact by means of an adjusting device (I), **characterized in that** the first connecting element (V1) and the second connecting element (V2) can be rotated and pivoted in relation to one another.

2. Flexible neck for a welding device according to Claim 1, **characterized in that** the rotating and pivoting can be effected about at least one axis, but in particular about two or more axes that are perpendicular to one another.

3. Flexible neck for a welding device according to Claim 1 or 2, **characterized in that** the adjusting device (I) has at least one base element (F), at least one holding element (H), and also at least one driving unit (C), in particular a servomotor and/or a DC servomotor and/or a pneumatic drive and/or a hydraulic drive, the driving unit (C) being arranged on the base element and interacting with the holding element (H) by way of at least one actuating element (D).

4. Flexible neck for a welding device according to one of the preceding claims, **characterized in that** the adjusting device (I) interacts with an open-loop/closed-loop control device, in particular the open-loop/closed-loop control device of a handling device or a higher-level stored-program controller, and can be activated by it and/or the adjusting device (I) can be adjusted, in particular flexibly bent.

5. Flexible neck for a welding device according to one of the preceding claims, **characterized in that** the adjusting device (I) has at least one base element (F), at least one holding element (H), and also at least one guiding element (K), at least one base element (F) and at least one holding element (H) being connected and interacting by way of at least one guiding element (K).

6. Flexible neck for a welding device according to one of the preceding claims, **characterized in that** the adjusting device (I) comprises at least one base element (F), at least one holding element (H), and also at least one coupling device (KU), by means of which at least one holding element (H) is connected to at least one base element (F) rotatably about at least one axis.

7. Flexible neck for a welding device according to Claim 6, **characterized in that** the coupling device (KU) comprises at least two coupling elements that are adapted to one another, in particular complement one another, one coupling element being arranged on the base element (F) and one coupling element being arranged on the holding element (H), and which coupling elements together form a joint, in particular a rotary joint, with at least one axis of rotation.

8. Flexible neck for a welding device according to one of the preceding claims, **characterized in that** the pivoting or rotating angle and the flexible bending angle of the adjusting device (I) can be changed and/or can be adapted steplessly and/or in predetermined steps.

9. Flexible neck for a welding device according to one of the preceding claims, **characterized in that** the adjusting device (I), and in particular the base element (F) and also the holding element (H), have, preferably centrally, at least one clearance for leading through at least one flexible media guide (G), in particular tubes or tube assemblies for conducting supply media, and/or said adjusting device is not fixedly connected to the at least one media guide (G).

10. Flexible neck for a welding device according to one of the preceding claims, **characterized in that** a guiding element (K) is provided, connected movably to the base element (F) by way of a further joint (A) and connected fixedly or rigidly to the holding element (H).

11. Flexible neck for a welding device according to one of the preceding claims, **characterized in that** a connection device (B) for arrangement on a welding device and/or a handling device is provided.

12. Flexible neck for a welding device according to one of the preceding claims, **characterized in that** the adjusting device (I) has sensors for determining the angular orientation and/or position, in particular capacitive, inductive or optical sensors, and also strain gauges and/or a combination thereof.

13. Flexible neck for a welding device according to one of the preceding claims, **characterized in that** the adjusting device (I) is integrated in the media guide (G).

14. Welding device for a handling device with a flexible neck for the welding device according to one of Claims 1 to 13.

15. Welding device for a handling device according to Claim 14, **characterized in that** at least one connection device, in particular a flange, for arranging the welding device on a handling device, in particular at the distal end thereof, is provided.

## Revendications

1. Col flexible d'appareil de soudure doté d'un dispositif de liaison ainsi que d'un élément de tête (M), le dispositif de liaison comprenant un premier élément de liaison (V1), ainsi qu'un deuxième élément de liaison (V2) interagissant à l'aide d'un dispositif de déplacement (I), **caractérisé en ce que** le premier élément de liaison (V1) et le deuxième élément de liaison (V2) peuvent être tournés et être pivotés l'un contre l'autre.

2. Col flexible d'appareil de soudure selon la revendication 1, **caractérisé en ce que** la torsion et le pivotement peuvent être effectués au moins autour d'un axe, notamment toutefois autour de deux axes ou plus placés verticalement l'un au-dessus de l'autre.

3. Col flexible d'appareil de soudure selon la revendication 1 ou 2, **caractérisé en ce que** le dispositif de déplacement (I) comporte au moins un élément de base (F), au moins un élément d'arrêt (H), ainsi qu'au moins une unité d'entraînement (C), notamment un servomoteur et/ou un servomoteur à courant continu et/ou un entraînement hydraulique et/ou pneumatique et/ou un entraînement hydraulique, l'unité d'entraînement (C) étant disposée au niveau de l'élément de base et interagissant avec l'élément d'arrêt (H) via au moins un élément de réglage (D).

4. Col flexible d'appareil de soudure selon l'une quelconque des revendications précédentes, **caractérisé en ce que** le dispositif de déplacement (I) interagit avec un dispositif de réglage de commande, notamment le dispositif de réglage de commande d'un dispositif de manipulation ou un élément de commande programmable par mémoire subordonné et pouvant être excité par celui-ci et/ou le dispositif de déplacement (I) pouvant être déplacé, notamment fléchi.

5. Col flexible d'appareil de soudure selon l'une quelconque des revendications précédentes, **caractérisé en ce que** le dispositif de déplacement (I) comporte au moins un élément de base (F), au moins un élément d'arrêt (H) ainsi qu'au moins un élément de guidage (K), au moins un élément de base (F) et d'arrêt (H) étant reliés via au moins un élément de guidage (K) et entrant en interaction l'un avec l'autre.

6. Col flexible d'appareil de soudure selon l'une quelconque des revendications précédentes, **caractérisé en ce que** le dispositif de déplacement (I) comprend au moins un élément de base (F), au moins un élément d'arrêt (H) ainsi qu'au moins un dispositif d'embrayage (KU) à travers lequel au moins un élément d'arrêt (H) est relié à au moins un élément de base (F) pouvant pivoter autour d'au moins un axe.

7. Col flexible d'appareil de soudure selon la revendication 6, **caractérisé en ce que** le dispositif d'embrayage (KU) comporte au moins deux éléments d'embrayage adaptés l'un à l'autre, notamment complémentaires, un élément d'embrayage étant respectivement disposé au niveau de l'élément de base (F) et au niveau de l'élément d'arrêt (H) et lesdits éléments d'embrayage formant une articulation, notamment une articulation pivotante, avec au moins un axe de rotation.

8. Col flexible d'appareil de soudure selon l'une quelconque des revendications précédentes, **caractérisé en ce que** l'angle de pivotement ou de rotation ainsi que l'angle de flexion du dispositif de déplacement (I) peuvent varier et/ou être adapté en continu et/ou suivant des pas prédéterminés.

9. Col flexible d'appareil de soudure selon l'une quelconque des revendications précédentes, **caractérisé en ce que** le dispositif de déplacement (I) et notamment l'élément de base (F) ainsi que l'élément d'arrêt (H), comportent de préférence de façon centrale au moins un évidement servant au passage d'au moins un guide d'agent flexible (G), notamment de tuyaux flexibles ou de paquets de tuyaux flexibles destinés à conduire des agents d'alimentation et/ou cet évidement n'étant pas relié fixement à l'au moins un guide d'agent (G).

10. Col flexible d'appareil de soudure selon l'une quelconque des revendications précédentes, **caractérisé en ce qu'**un élément de guidage (K) est prévu lequel est relié de façon mobile à l'élément de base (F) via une articulation (A) supplémentaire et de façon permanente et/ou rigide à l'élément d'arrêt (H).

11. Col flexible d'appareil de soudure selon l'une quelconque des revendications précédentes, **caractérisé en ce qu'**un dispositif de jonction (B) est prévu pour être agencé au niveau d'un appareil de soudure et/ou d'un dispositif de manipulation.

12. Col flexible d'appareil de soudure selon l'une quelconque des revendications précédentes, **caractérisé en ce que** le dispositif de déplacement (I) comporte des capteurs permettant de déterminer la position angulaire et/ou la position des capteurs notamment capacitifs, inductifs ou optiques, ainsi que la bande de mesure de dilatation et/ou une combinaison de ceux-ci.

13. Col flexible d'appareil de soudure selon l'une quelconque des revendications précédentes, **caractérisé en ce que** le dispositif de déplacement (I) est intégré dans le guide d'agent (G).

14. Appareil de soudure pour un dispositif de manipulation doté d'un col flexible d'appareil de soudure selon l'une quelconque des revendications 1 à 13.

15. Appareil de soudure pour un dispositif de manipulation selon la revendication 14, **caractérisé en ce qu'**au moins un dispositif de jonction, notamment une bride, est prévu pour agencer l'appareil de soudure au niveau d'un dispositif de manipulation, notamment au niveau de son extrémité distale.
